# EUROPÄISCHE PATENTANMELDUNG

(11) **EP 1 225 527 A2**
(43) Veröffentlichungstag der Anmeldung: **24.07.2002**
(21) Anmeldenummer: 01130395.5
(22) Anmeldetag: 20.12.2001
(51) Int. Cl.: G06F 17/60

(54) **Verfahren zur Planung einer Reparatur von mobilen Arbeitsmaschinen**

(30) Priorität: 17.01.2001 DE 10102051
(71) Anmelder: CLAAS Selbstfahrende Erntemaschinen GmbH, 33428 Harsewinkel (DE)
(72) Erfinder: Wippersteg, Hans-Hermann, 32257 Bünde (DE)

(57) **Zusammenfassung**

Erfindungsgemäß soll eine Beschreibung der erforderlichen Reparatur zusammen mit einer Maschinenkennung von einem lokalen Computersystem an einen zentralen Server übermittelt werden, damit dieser unter Verwendung maschinenspezifischer Daten einen Vorschlag zum Ablauf der Reparatur erstellen und zurück übermitteln kann. Durch die Kombination allgemeiner Reparaturdaten mit maschinenspezifischen Daten ist es möglich, die Reparatur besser zu planen, Ersatzteile zu disponieren und die Ausführung zu kontrollieren. Die bei der Reparatur anfallenden Daten können vorteilhaft für nachgelagerte Arbeitsschritte und Auswertungen genutzt werden.

## Beschreibung

Die vorliegende Erfindung bezieht sich auf ein Verfahren zur Planung einer Reparatur von mobilen Arbeitsmaschinen.

Heute ist der Ablauf einer Reparatur einer mobilen Arbeitsmaschine häufig nicht optimal geplant, und aufgrund der Planungsmängel ergeben sich bei der Durchführung der Reparatur Verzögerungen und Mehrkosten. Als mobile Arbeitsmaschinen kommen insbesondere Land-, Bau- und Forstmaschinen in Betracht. Wenn ein Maschinenschaden diagnostiziert wurde, muß der Reparaturumfang ermittelt werden. Dazu gehört es, zu überblicken, welche Teile ausgebaut werden müssen, welche Werkzeuge und Hilfsmittel dazu benötigt werden, welche Ersatzteile erforderlich und wann diese verfügbar sind, welches Fachpersonal zur Verfügung stehen muß und wie lange die Reparatur dauern wird. Eine zusätzliche Schwierigkeit ergibt sich daraus, dass konstruktive Details von mobilen Arbeitsmaschinen auch während einer laufenden Serie häufiger geändert werden. Deshalb gibt es von einem bestimmten Funktionsteil häufig mehrere Ausführungen, die nicht immer zu der zu reparierenden Maschine passen müssen. Auch ist es möglich, dass mobile Arbeitsmaschinen während ihrer Lebensdauer um- oder aufgerüstet werden und solche Umbauten oder Ausstattungsänderungen einen Einfluß haben auf den Umfang einer Reparatur. Auch wird häufig erst während einer Reparatur entdeckt, dass einzelne während der Reparatur ausgebaute Teile die Grenze ihrer technischen Lebensdauer erreichen und deshalb bei der Reparatur ebenfalls ausgetauscht werden sollen. Solche Teile müssen dann jedoch als Ersatzteile nachdisponiert werden, was zu Verzögerungen führen kann. Da die mobile Arbeitsmaschine von ihrem Besitzer in einem laufenden Arbeitsprozeß eingesetzt wird, muss die Reparatur so schnell wie möglich erfolgen. Gegenwärtig ist es vom Wissen und der Erfahrung des Werkstattpersonals abhängig, ob alle den Reparaturprozeß beeinflussenden Parameter richtig erfasst und die richtigen gestalterischen und planenden Maßnahmen ergriffen werden. Viele Fehler von Reparaturprozessen treten auf, weil zwar allgemein richtig geplant wurde, dabei aber spezifische Besonderheiten der zu reparierenden Arbeitsmaschine übersehen wurden.

Es ist die Aufgabe der vorliegenden Erfindung, das Verfahren zur Planung einer Reparatur von mobilen Arbeitsmaschinen zu verbessern.

Die Planung einer Reparatur einer mobilen Arbeitsmaschine wird verbessert, wenn die Planung gemäß den folgenden Verfahrensschritten erfolgt: ein Reparaturauftrag für eine zu reparierende Arbeitsmaschine wird in ein lokales Computersystem unter Angabe einer Kennung der Arbeitsmaschine eingegeben, der Reparaturauftrag und die Kennung der Arbeitsmaschine wird an einen zentralen Server über Telekommunikationsmittel übermittelt, gespeicherte Daten zu dieser Arbeitsmaschine werden vom zentralen Server aufgerufen, ein Reparaturplan wird unter Verwendung der eingegebenen Angaben zur Art der Reparatur sowie der spezifischen zuvor aufgerufenen Daten der Arbeitsmaschine computergestützt generiert, wobei dieser Reparaturplan vom zentralen Server erstellt wird, und der Reparaturplan wird an das lokale Computersystem über Telekommunikationsmittel übermittelt.

Gemäß einer Variante des erfindungsgemäßen Verfahrens zur Planung einer Reparatur von mobilen Arbeitsmaschinen wird ein Reparaturauftrages für eine zu reparierende Arbeitsmaschine in ein lokales Computersystem unter Angabe einer Kennung der Arbeitsmaschine eingegeben, der Reparaturauftrag und die Kennung der Arbeitsmaschine wird an einen zentralen Server über Telekommunikationsmittel übermittelt, gespeicherte Daten zu dieser Arbeitsmaschine werden vom zentralen Server aufgerufen, die aufgerufenen Daten werden an das lokale Computersystem über Telekommunikationsmittel übermittelt, und ein Reparaturplan unter Verwendung der eingegebenen Angaben zur Art der Reparatur sowie der spezifischen Daten der Arbeitsmaschine wird computergestützt generiert, wobei dieser Reparaturplan vom lokalen Computersystem erstellt wird.

Die beiden Varianten des erfindungsgemäßen Verfahrens weisen den Vorteil auf, dass auf dem zentralen Server oder dem lokalen Computersystem ein standardisierter Reparaturablaufplan hinterlegt ist, der mit maschinenspezifischen Daten verknüpft wird. Dadurch ist es möglich, einen Großteil der Fehlerquellen, die heute einen optimalen Ablauf der Reparatur behindern, unter Ausnutzung von computergestütztem Datenmanagement systematisch zu beseitigen.

Wenn der Begriff der "Reparatur" in dieser Beschreibung und in den Ansprüchen verwendet wird, so ist dieser in seiner Bedeutung nicht auf den Austausch fehlerhafter Teile beschränkt zu verstehen, sondern er ist weit, beispielsweise auch unter Einbeziehung von Wartungsarbeiten, zu verstehen. Ein Reparaturauftrag kann über einen Zahlen- oder Buchstabencode übermittelt werden, oder es werden Stichworte oder Ersatzteilnummern der zu reparierenden Komponenten eingegeben. Die Kennung der Arbeitsmaschine könnte beispielsweise aus der herstellerseitig vergebenen Maschinennummer oder einer sonstigen speziellen Kennung bestehen. Die Eingabe könnte beispielsweise über Barcodes, eine maschinenspezifische Chipkarte, die durch einen Chipkartenleser gezogen wird, oder durch eine ähnliche bekannte Technik zur Identifizierung Kennungen von Objekten erfolgen.

Das lokale Computersystem kann beispielsweise ein Computerarbeitsplatz in einem Reparaturbetrieb oder in der Werkstatt des Maschinenbesitzers sein. Es kann sich aber auch um einen mobilen Computer handeln, der über Möglichkeiten zur Telekommunikation verfügt, beispielsweise einen Rechner, der als mobiler Bordcomputer auf der Arbeitsmaschine angeschlossen ist, oder ein Rechner, der in einem Werkstattwagen installiert ist, mit dem die zu reparierende Maschine angefahren werden kann.

Ein zentraler Server kann im Bereich des Herstellers der mobilen Arbeitsmaschine angeordnet sein. Es ist auch möglich, einen solchen Server bei größeren Händlern oder Importeuren von mobilen Arbeitsmaschinen aufzustellen, bei Unternehmen, die Maschinen vermieten oder verleasen und solche Dienste auch für ihre eigenen Mietmaschinen nutzen, oder bei darauf spezialisierten Dienstleistungsunternehmen, die Beratungs- und Servicedienstleistungen rund um Arbeitsmaschinen anbieten.

Die computergestützte Generierung eines Reparaturplans kann auf eine an sich für einen Fachmann bekannte Art und Weise erfolgen. In einer Datenbank wird für jede spezielle Reparatur ein Arbeitspfad hinterlegt, welche Teile ausgebaut werden müssen, um an das defekte Teil heranzukommen, der Austausch des defekten Teiles selbst und der Arbeitspfad, um die Arbeitsmaschine wieder in einen betriebsbereiten Zustand zu versetzen. Auf diesem Arbeitspfad werden alle Teilenummern vermerkt, die bewegt werden, alle Teile, die wegen des Ausbaus ersetzt werden müssen, eine Liste von Teilen, die verschleißbedingt eventuell ausgetauscht werden könnten, sowie die erforderlichen Arbeitszeiten, Kosten und benötigten Werkzeuge. Bei Eingabe einer speziellen Reparatur ruft der zentrale Server aus dieser Datenbank über eine geeignete Software die gespeicherten Daten wie Arbeitspfade, Teilenummern, Arbeitszeiten und Werkzeuge ab und kann diese aufgerufenen Daten weiterverarbeiten, wenn zusätzlich die zu der zu reparierenden Arbeitsmaschine gespeicherten Daten vorliegen. Daten der zu reparierenden Arbeitsmaschine können beispielsweise der Maschinentyp, Baujahr, Ausstattung, Betriebsstunden und oder die bisherige Servicehistorie sein.

Die Weiterverarbeitung geschieht beispielsweise, indem die allgemein in der Datenbank abgespeicherten Daten mit den individuellen Maschinendaten abgeglichen werden. So kann ebenfalls über eine geeignete Software geprüft werden, ob für bestimmte Ersatzteile von Maschinen eines Baujahres andere Ersatzteilnummern gelten, ob wegen besonderer Maschinenausstattungen ein abgewandelter Arbeitspfad gewählt werden muß, ob besondere Werkzeuge wie beispielsweise ein Diagnosecomputer mit einem bestimmten Software-Release erforderlich sind, ob anlässlich der Reparatur bestimmte Wartungsarbeiten mit vorgenommen werden können oder sollen, ob einzelne von der Reparatur betroffene oder angrenzende Teile vorsorglich mit getauscht werden sollten und dergleichen. Eine solche Auswahl von besonderen Merkmalen kann natürlich auch schon vorgenommen werden, bevor oder während der zentrale Server gespeicherte Daten aus der Datenbank entnimmt. Die geeignete Software- Lösung kann von einem Programmierfachmann anhand seines Fachwissens unter Berücksichtigung der besonderen Umstände der Dateneingabe, -haltung und -generierung ausgewählt und realisiert werden. Durch den softwaregestützten Abgleich der allgemeinen Reparaturpläne mit den maschinenspezifischen Daten erfolgt also eine individuelle Anpassung eines allgemeinen Reparaturplans, in dem die Besonderheiten der zu reparierenden Maschine berücksichtigt sind. Diese Anpassung kann auf der Ebene des zentralen Servers erfolgen, es ist aber auch möglich, dass diese Anpassung auf dem lokalen Computersystem erfolgt, wenn dieses die zentral gespeicherten spezifischen Maschinendaten übermittelt bekommt und über die Daten zu den allgemeinen Arbeitsplänen und Anpassungsprogrammen verfügt.

Um Reparaturpläne auf einer aktuellen und erweiterten Datenbasis erstellen zu können, ist es vorteilhaft, zusätzlich Daten aus dem bordeigenen Diagnosesystem der zu reparierenden Arbeitsmaschine auf den zentralen Server oder das lokale Computersystem zu übermitteln. Auf diese Weise können bestimmte Fehlerhinweise, die in dem Diagnosesystem abgespeichert sein können, zur Festlegung des Reparaturplans mitberücksichtigt werden. So kann anhand der Diagnosecodes geprüft werden, ob die richtige Diagnose für den Funktionsfehler der Arbeitsmaschine gestellt und eine Reparatur geplant ist, die den aufgetretenen Fehler dauerhaft beseitigt, oder ob anlässlich der Reparatur gleich vorsorglich andere Teile mit getauscht werden sollten.

Vorteilhaft sind in dem Reparaturplan auch graphische Hinweise zur Durchführung der Reparatur enthalten. So kann der Reparaturplan eine bildliche Dokumentation des gesamten oder auch nur teilweisen Reparaturablaufs enthalten, und auf schwierige Passagen oder beachtenswerte Besonderheiten kann auf besondere Art und Weise hingewiesen werden. Die graphischen Hinweise können als Bild- oder Videodatei an den Reparaturplan angehängt werden.

Ein computergestützt generierter Reparaturplan wird zunächst als Vorschlag an das Werkstattpersonal oder den Maschinenbesitzer übermittelt. Diese können prüfen, ob sie mit der vorgeschlagenen Reparatur einverstanden sind. Der zentrale Server oder das lokale Computersystem kann anhand der Liste über die für die Reparatur benötigten Teile einen Verfügbarkeitscheck durchführen, ob und wann welche Ersatzteile, Werkzeuge und Personalkapazitäten verfügbar sind, und anhand dieses Verfügbarkeitschecks eine Prognose über den Beginn und die Dauer der Reparatur erstellen. Wird ein Punkt des Reparaturplans beanstandet, z.B. zu hohe Kosten, zu später Reparaturbeginn, fehlende Teileverfügbarkeit, zu großer oder zu geringer Arbeitsumfang, kann ein abgeänderter Reparaturplan verfahrensgemäß abgefragt werden. Dieser Prozeß kann so lange wiederholt werden, bis alle Beteiligten mit dem erstellten Reparaturplan einverstanden sind.

Wurde ein Reparaturplan allseits akzeptiert, kann er die Basis sein für verschiedene nachgeordnete Vorgänge. So können bei Akzeptanz des Reparaturplans automatisiert die Lagerorte der für die Reparatur erforderlichen Ersatzteile abgefragt werden, und, wenn die Lagerorte vom Reparaturort abweichen, eine automatisierte Versandbeauftragung an den jeweiligen Lagerort der Ersatzteile erfolgen. Eine solche Versandbeauftragung kann ebenfalls softwaregestützt ausgelöst werden. Außerdem können die benötigten Mitarbeiter, Werkzeuge, Werkstattfahrzeuge und Werkstattflächen für die Dauer der geplanten Reparatur belegt werden.

Der Reparaturplan kann vom Werkstattpersonal genutzt werden, um die Durchführung der Reparatur anhand von Eingaben in einen Computer, beispielsweise das lokale Computersystem, zu dokumentieren. So können einzelne Arbeitsschritte quittiert oder mit Bemerkungen versehen werden. Durch eine Übermittlung der ausgeführten Arbeiten an den zentralen Server unter Angabe der Maschinenkennung kann der Pflegestatus der Arbeitsmaschine aktualisiert werden. Dadurch ist gewährleistet, dass bei jeder weiteren Abfrage der gespeicherten Maschinendaten auch die jüngsten Arbeiten an der Arbeitsmaschine berücksichtigt werden können. Die Dokumentation der Reparatur kann auch als Datenbasis genutzt werden für die Rechnungserstellung, für Soll-/Ist-Vergleiche über Reparaturzeiten und Leistungsvergleiche der für die Reparatur eingesetzten Mitarbeiter. Die Reparaturdaten können außerdem auf dem lokalen Computersystem oder dem zentralen Server genutzt werden für statistische Auswertungen über Ausfallwahrscheinlichkeiten bestimmter Teile, über tatsächliche Reparaturzeiten, für die Vordisposition von Ersatzteilen und ähnliche Anwendungen. Die aus dem Datenrückfluß über Reparaturen erhaltenen Daten können auch benutzt werden, das System in seiner Vorhersagegenauigkeit, praktischen Brauchbarkeit, Effizienz und Ersatzteildistribution laufend zu überprüfen und in einem Selbstlernprozeß ständig zu verbessern. Die gesammelte Datenbasis erlaubt eine gezielte Schwachstellenanalyse. Für die Schulung von Kundendienst- und Werkstattpersonal können Schulungsschwerpunkte identifiziert und Arbeitsfolgen, Arbeitsanweisungen, Lehr- und Lernmaterial verbessert und bereitgestellt werden, auch im Rahmen des verfahrensgemäßen Prozesses. Der Ausbau eines solchen Angebots zu abrufbaren interaktiven Animationen ist möglich, auch die Verknüpfung mit vorgangsindividuellen Callcenterfunktionen. Das erfindungsgemäße Verfahren liefert Daten für eine Qualitätsstatistik von Bauteilen der Arbeitsmaschine, für eine Lebensdauerüberwachung von Komponenten und eine Verwertung solcher Daten in Systemen für eine vorbeugende Instandhaltung.

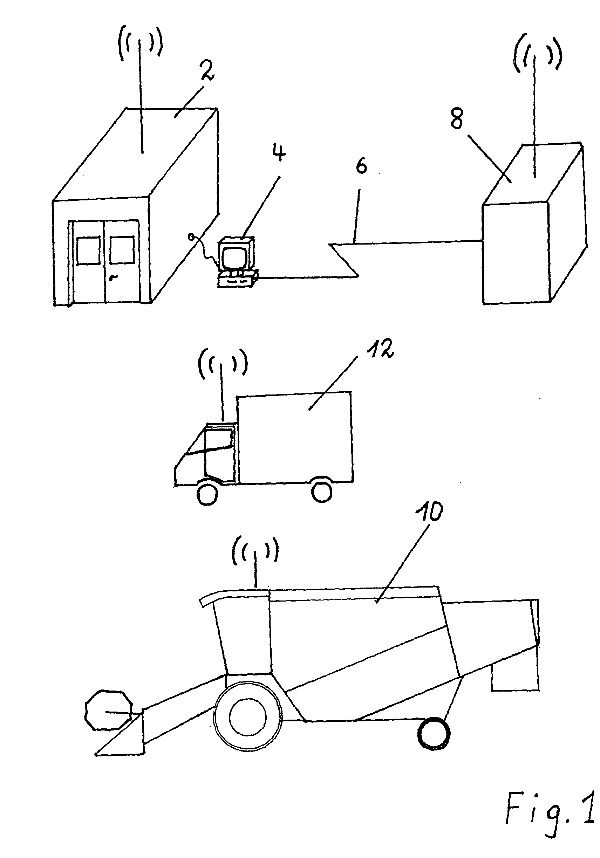

Das Verfahren soll nun anhand eines Ausführungsbeispiels näher erläutert werden. Figur 1 zeigt eine Werkstatt 2, die über ein Büro verfügt, in dem ein lokales Computersystem 4 installiert ist. Über Telekommunikationsmittel 6, hier eine Kabelverbindung, kann das lokale Computersystem 4 mit einem zentralen Server 8 Daten austauschen. Bekommt die Werkstatt 2 einen Reparaturauftrag zur Reparatur der mobilen Arbeitsmaschine 10, so wird dieser Reparaturauftrag in das lokale Computersystem 4 eingegeben. Zusammen mit der Kennung für die zu reparierende Arbeitsmaschine 10 wird eine Beschreibung des zu erledigenden Reparaturumfanges über die Leitung 6 an den zentralen Server 8 gesandt. Wie oben bereits beschrieben, verarbeitet der zentrale Server 8 den übermittelten Reparaturauftrag unter Ausnutzung von spezifischen Daten über die zu reparierende mobile Arbeitsmaschine, auf die der zentrale Server 8 Zugriff hat, zu einem Reparaturvorschlag und sendet diesen zurück an das lokale Computersystem 4. Hinsichtlich des zentralen Servers 8 ist zu beachten, dass nicht zwangsläufig alle relevanten räumlich auf diesem zentralen Server 8 gespeichert sein müssen, es ist vielmehr auch denkbar, dass die entsprechenden Daten und Softwareprogramme dezentral auch in einer Mehrzahl von räumlich voneinander getrennten Servern verfügbar sind, der zentrale Server 8 jedoch mit diesen getrennt aufgestellten Servern eine Möglichkeit zum Datenaustausch hat und sich entsprechend benötigte Datensätze und Programmteile zur Aufgabenerledigung beschaffen kann. Der Datenaustausch muß nicht zwangsläufig über Kabelverbindungen erfolgen, sondern ist auf jede technisch an sich bekannte Art und Weise möglich, wie beispielsweise auch über Funk, GSM oder Lichtwellen.

Funksysteme sind zur Datenübertragung interessant, weil mobile Einheiten in den Datenaustausch miteinbezogen werden können. So kann entweder das lokale Computersystem oder der zentrale Server über Funksysteme den Diagnosespeicher der mobilen Arbeitsmaschine 10 abfragen und so den Datenbestand über diese Maschine aktualisieren. Genauso ist es möglich, einen mobilen Werkstattwagen 12 in die Planung und Durchführung der Reparatur mit einzubeziehen. So kann dem Werkstattwagen mitgeteilt werden, wann er wo welche Ersatzteile abzuholen und welche Werkzeuge er mitzuführen hat, welche Reparaturaufträge er wo durchführen soll, wie viel Zeit ihm für die Erledigung der Reparaturen zur Verfügung steht und welche Besonderheiten er bei der Durchführung einer Reparatur zu beachten hat. Bei einer solchen Fernsteuerung von mobilen Werkstattwagen braucht die mobile Arbeitsmaschine 10 möglicherweise gar nicht mehr in die Werkstatt überführt werden, wodurch wertvolle Einsatzzeit verloren ginge, sondern kann am Einsatzort sofort und effektiv wieder betriebsbereit gemacht werden.

## Patentansprüche

1. Verfahren zur Planung einer Reparatur von mobilen Arbeitsmaschinen,
**gekennzeichnet durch**
- die Eingabe eines Reparaturauftrages für eine zu reparierende Arbeitsmaschine in ein lokales Computersystem unter Angabe einer Kennung der Arbeitsmaschine,
- die Übermittlung der Kennung der Arbeitsmaschine an einen zentralen Server über Telekommunikationsmittel,
- den Aufruf gespeicherter Daten zu dieser Arbeitsmaschine vom zentralen Server,
- eine computergestützte Generierung eines Reparaturplans unter Verwendung der eingegebenen Angaben zur Art der Reparatur sowie der spezifischen Daten der Arbeitsmaschine, wobei dieser Reparaturplan vom zentralen Server erstellt wird,
- die Übermittlung des Reparaturplans an das lokale Computersystem über Telekommunikationsmittel.

2. Verfahren zur Planung einer Reparatur von mobilen Arbeitsmaschinen,
**gekennzeichnet durch**
- die Eingabe eines Reparaturauftrages für eine zu reparierende Arbeitsmaschine in ein lokales Computersystem unter Angabe einer Kennung der Arbeitsmaschine,
- die Übermittlung der Kennung der Arbeitsmaschine an einen zentralen Server über Telekommunikationsmittel,
- den Aufruf gespeicherter Daten zu dieser Arbeitsmaschine vom zentralen Server,
- die Übermittlung der aufgerufenen Daten an das lokale Computersystem über Telekommunikationsmittel,
- eine computergestützte Generierung eines Reparaturplans unter Verwendung der eingegebenen Angaben zur Art der Reparatur sowie der spezifischen Daten der Arbeitsmaschine, wobei dieser Reparaturplan vom lokalen Computersystem erstellt wird.

3. Verfahren nach Anspruch 1 oder 2,
**dadurch gekennzeichnet,**
**dass** sich die aufgerufenen gespeicherten Daten auf den Maschinentyp, Baujahr, Ausstattung, Betriebsstunden und/oder Servicehistorie beziehen.

4. Verfahren nach einem oder mehreren der Ansprüche 1 bis 3,
**dadurch gekennzeichnet,**
**dass** zur Erstellung des Reparaturplans zusätzlich Daten aus dem Diagnosesystem der Arbeitsmaschine auf den Server oder das lokale Computersystem übermittelbar sind.

5. Verfahren nach einem oder mehreren der Ansprüche 1 bis 4,
**dadurch gekennzeichnet,**
**dass** der Reparaturplan Angaben hinsichtlich des zu planenden Zeitaufwands, der benötigten Teile, der benötigten Werkzeuge, graphische Hinweise zur Durchführung der Reparatur und/oder der Abfolge von Arbeitsschritten enthält.

6. Verfahren nach einem oder mehreren der Ansprüche 1 bis 5,
**dadurch gekennzeichnet,**
**dass** der Reparaturplan zusätzliche Vorschläge zum vorbeugenden Austausch von Teilen enthält.

7. Verfahren nach einem oder mehreren der Ansprüche 1 bis 6,
**dadurch gekennzeichnet,**
**dass** bei Akzeptanz des Reparaturplans eine automatisierte Disposition von benötigten Ressourcen erfolgt.

8. Verfahren nach einem oder mehreren der Ansprüche 1 bis 7,
**dadurch gekennzeichnet,**
**dass** die Erledigung von einzelnen oder allen im Reparaturplan enthaltenen Arbeitsschritten in das lokale Computersystem eingebbar ist.

9. Verfahren nach einem oder mehreren der Ansprüche 1 bis 8,
**dadurch gekennzeichnet,**
**dass** das lokale Computersystem aus dem Reparaturplan eine Dokumentation über die durchgeführte Reparatur erstellt und die Dokumentation an den zentralen Server unter Angabe der Kennung der Arbeitsmaschine übermittelt.

10. Verfahren nach einem oder mehreren der Ansprüche 1 bis 9,
**dadurch gekennzeichnet,**
**dass** das lokale Computersystem oder der zentrale Server anhand des Reparaturplans eine Abrechnung über die Reparatur erstellt.
